# EUROPEAN PATENT SPECIFICATION

(11) **EP 0 508 933 B1**
(45) Date of publication and mention of the grant of the patent: **11.10.1995**
(21) Application number: 92610025.6
(22) Date of filing: 08.04.1992
(51) Int. Cl.: B65F 1/06, B65F 1/14, B62B 3/10, B62B 5/02

(54) **Refuse collection system with bagholder**
System mit Sackhalter zum Sammeln von Abfall
Système avec un support de sac pour le ramassage d'ordures

(30) Priority: 12.04.1991 DK 668/91
(43) Date of publication of application: 14.10.1992
(73) Proprietor: BATES EMBALLAGE A/S, 9400 Norresundby (DK)
(72) Inventor: Hinrichsen, Poul Elo, DK-9320 Hjallerup (DK)
(74) Representative: Thierry-Carstensen, Ole Jean

(56) References cited:
- BE-A- 497 985
- CH-A- 587 154
- DE-A- 3 013 548
- DE-U- 8 900 348
- FR-A- 2 124 445
- US-A- 4 194 654

## Description

The invention relates to a refuse system comprising a detachable rubbish bag holder for receiving rubbish bags, especially paper bags, and having in the side an opening for passage of a filled bag when emptying the holder.

Swedish printed accepted application No. 352,599 discloses a container for storage of refuse, said container being constructed from at least three parts. The refuse container is easy to assemble and take apart. The container is provided with a gate which is removable when the rubbish bag is to be removed from the container. The refuse container is adapted to be firmly mounted on a wall or the like.

More types of securing clamps for rubbish bags are known. However, the refuse clamps still require the bag to be carried away from the clamp by hand and therefore the bag has to be strong per se in order not to burst during the transport.

The object of the invention is to provide a hygienic, multi-faceted refuse processing system which is easy to handle, said systen on the one hand making it easier to collect one of more refuse fractions at the household without using too much time on the individual collection and on the other hand rendering more hygienic the handling of those parts of the fractionation of the refuse which provide a relatively large hygienic nuisance to the sanitation worker (this especially regards green/wet rubbish for composting which was previously mixed with i.a. glass, paper and metal scraps and which is biologically quite active and therefore not particularly pleasant to come into contact with for the people handling it).

The object is also to provide components to be used when handling the refuse, said components allowing sorting into minimum two fractions, preventing stick or cutting injuries and being designed ergonomicly correct.

The refuse system according to the invention is characterised in that it comprises a stationary fitting detachably receiving the holder, the opening of which being substantially closed by said fitting. As a result, the bag may be removed by removing the holder from the fitting and tipping the bag out through the opening in the side when the bag is filled without the sanitation worker having to touch the bag. Likewise, even a wet or otherwise fragile bag is kept together by the rubbish bag holder while being transported to the refuse collection lorry. When the holder is secured to the fitting, a container is provided which securely protects the contents and especially the bag until the emptying.

The rubbish bag holder according to the invention comprises a top portion, a bottom portion substantially horizontal during use and a cover placed between the top portion and the bottom portion, said cover further guiding the inner bag fastened at the top portion.

Moreover, the rubbish bag holder according to the invention is characterised in that the rubbish bag is to be released from the rubbish bag holder by moving the top portion relative to the box-shaped cover.

Furthermore, the rubbish bag holder according to the invention is characterised in that the suspension line (i.e. the line along which the rubbish bag holder is fitted) is placed in the top portion or the upper portion of the box-shaped cover, however, without the top portion or the box-shaped cover being separable when hung, whereby the waste bag would otherwise be released unintentionally.

The invention is described in greater detail below with reference to the accompanying drawings, in which
Figure 1 shows an embodiment of the rubbish bag holder according to the invention,
Figure 2 shows a second embodiment of the rubbish bag holder according to the invention,
Figure 3 shows a fitting for the rubbish bag holder of the type shown in or Figure 1 or 2,
Figure 4 shows a third embodiment of the rubbish bag holder,
Figure 5 shows a support/fitting for the rubbish bag holder shown in Figure 4,
Figure 6 shows the rubbish bag holder system shown in Figure 4 and 5 including cart, some of the parts shown in exploded view,
Figure 7 shows an embodiment of the cart according to the invention,
Figure 8 is a draft illustrating the principles of handling the cart,
Figure 9 shows further details of carts according to the invention,
Figure 10 shows yet another embodiment of the cart according to the invention, and
Figure 11 shows different steps in the handling of the cart during dismounting and mounting of the rubbish bag holder.

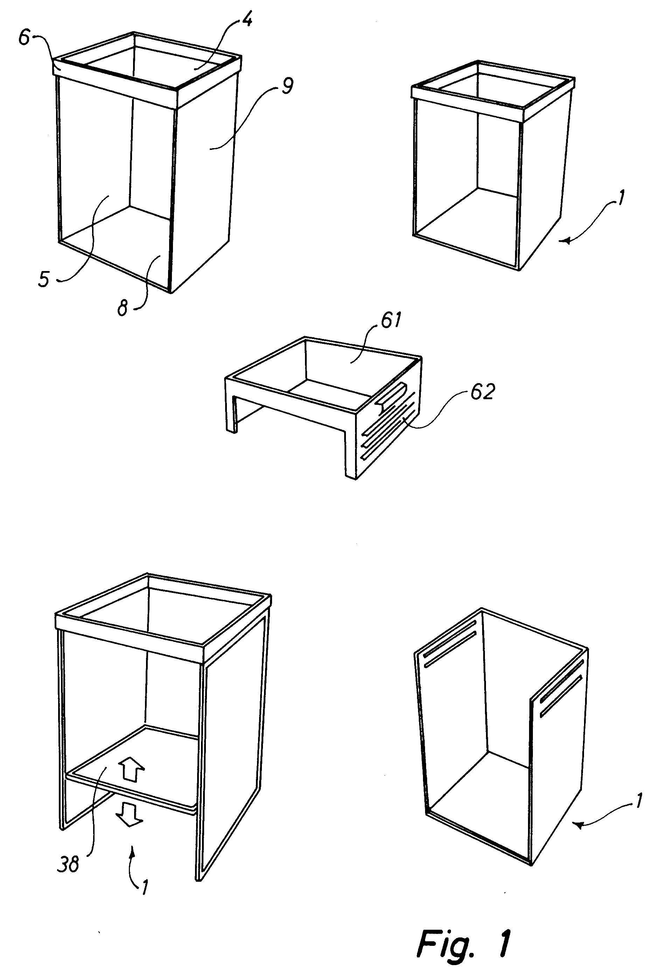

Figure 1 shows the rubbish bag holder 1 according to the invention in different sizes. The rubbish bag holders 1 may have different fixed sizes but may also have variable sizes, e.g. by the bottom portion being displacable in the vertical direction, e.g. by means of grooves. The size may also be changed by the top portion being placed in different grooves whereby the distance from the top of the top portion 6 to the bottom portion is variable.

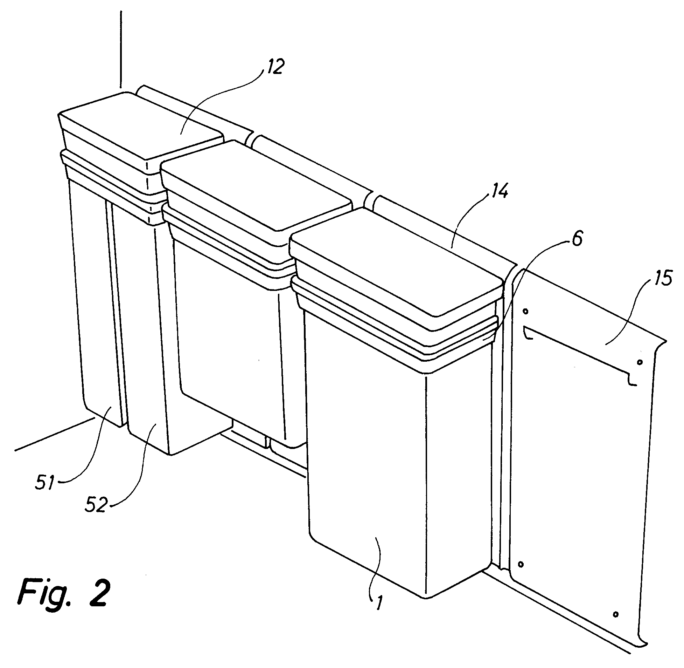

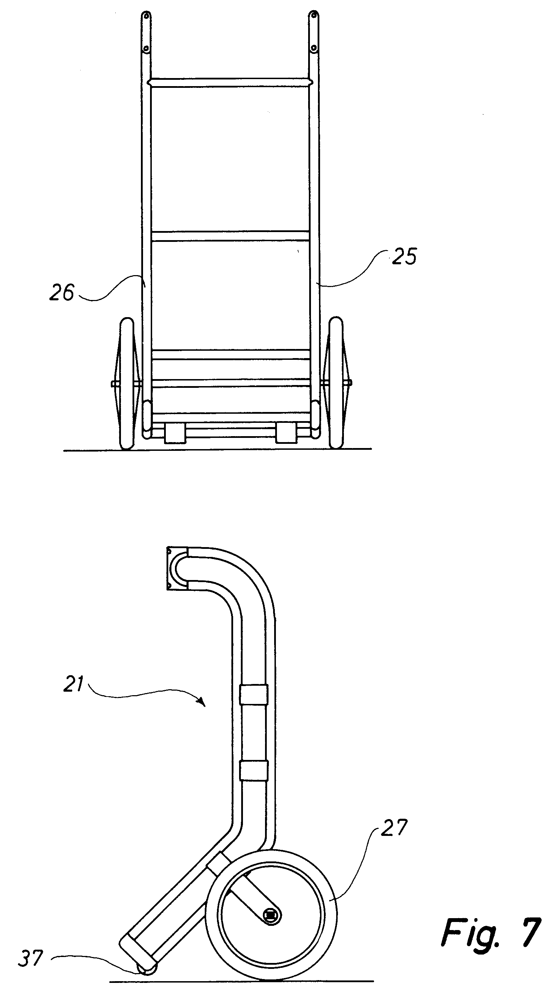

In Figure 2 it is seen how rubbish bag holders in different sizes are placed on a wall fitting 14. The rubbish bag holders 1 may also be divided into two portions, 51, 52 of the individual rubbish bag holder, allowing the division of paper into plastic covered paper and paper without plastic cover or coloured glass and non-coloured glass. It is also seen that one wall fitting 15 is not used as said wall fitting 15 is to be used for the fitting of a new rubbish bag holder when one of the other is to be emptied. The new rubbish bag holder 1 is transported to the fitting by means of the cart 21 shown in Figure 7.

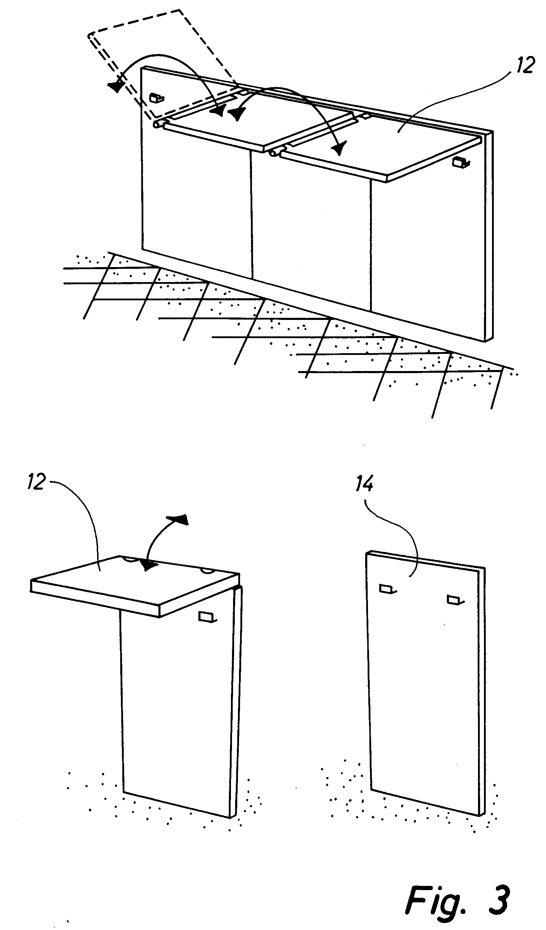

In Figure 3 it is seen how a lid 12 may be mounted on the fitting 14 of the rubbish bag holders 1. The lids 12 may either be tilted sidewards, thereby allowing a lid to be shared by two adjacent fittings 14, or the lid 12 may be mounted in such a manner so as to tip down over the fitting 14 per se, whereby the lid 12 is not in the way. Finally, the fitting may be manufactured without a lid.

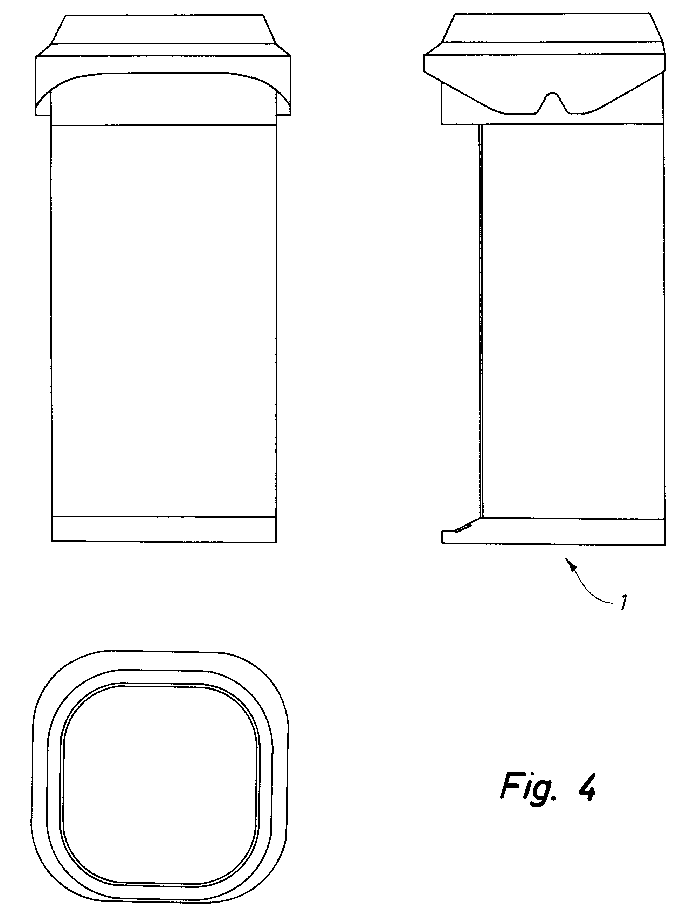

Figure 4 shows a third embodiment of the rubbish bag holder 1. The rubbish bag holder is manufactured integrally, i.e. both top portion, cover and bottom portion are in one piece.

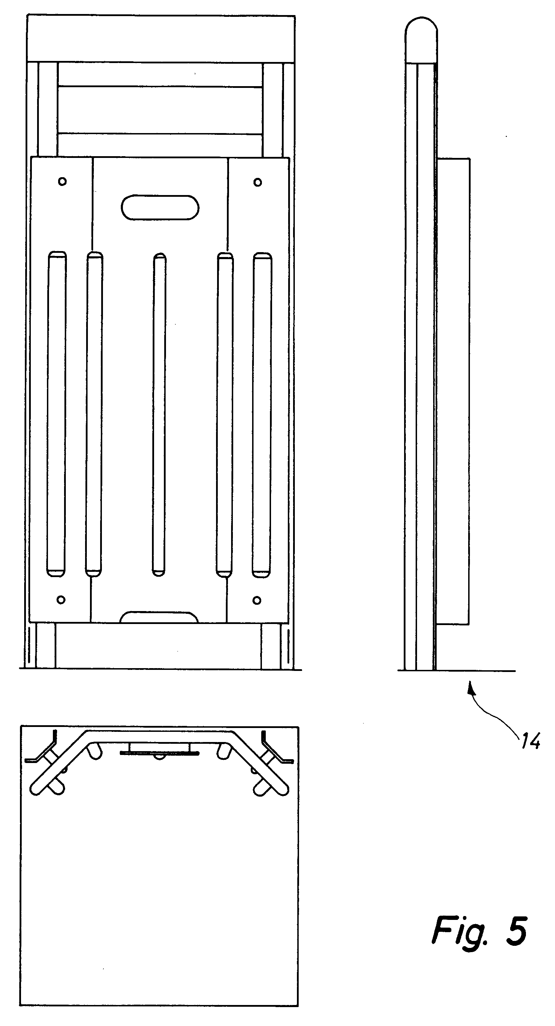

Figure 5 shows a fitting 14, adapted for the rubbish bag holder shown in Figure 4. The fitting may be provided with signs and light.

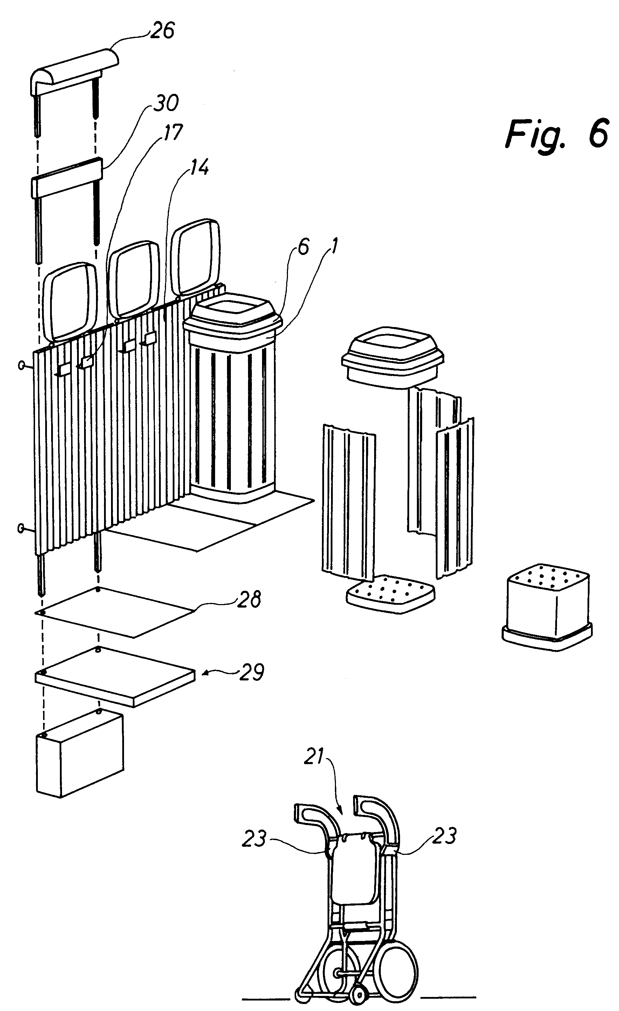

Figure 6 shows the third embodiment of the rubbish bag holder 1 where the fitting 14 consists of plate portions with hooks 17 adapted to engage the top portion 6 of the rubbish bag holder 1. The cart 21 is provided with corresponding hooks, so as to allow said cart to be run in under the rubbish bag holder, said rubbish bag holder always being placed clear of the ground, and engage the top portion 6 in the same way as the fitting. The fitting per se may be constructed in modules, whereby both the base 29, bottom plates 28, signs 30 and light 26 may be mounted from the start or be provided as a supplementary fitting.

The cart 21 shown in Figure 7 is constructed with two wheels 27 or pairs of rollers 37, where one set of wheels is adapted for the transport and the other set of rollers is adapted for mounting or dismounting a rubbish bag holder 1 on a fitting. The latter set of wheels or rollers is placed in front of the centre of gravity both when the cart 21 is unloaded and when the cart is loaded with a filled rubbish bag holder 1.

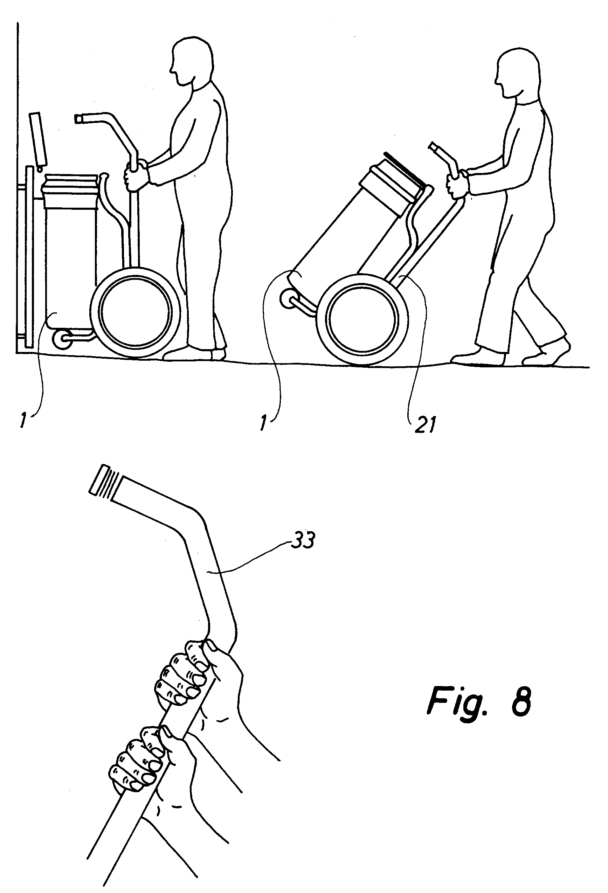

In Figure 8 is seen how a rubbish bag holder may be dismounted and transported away. The design of the handle 33 of the cart 21 is such that the height, positioning of the hands and strength of the user do not cause any lifting problems or unfavourable working postures.

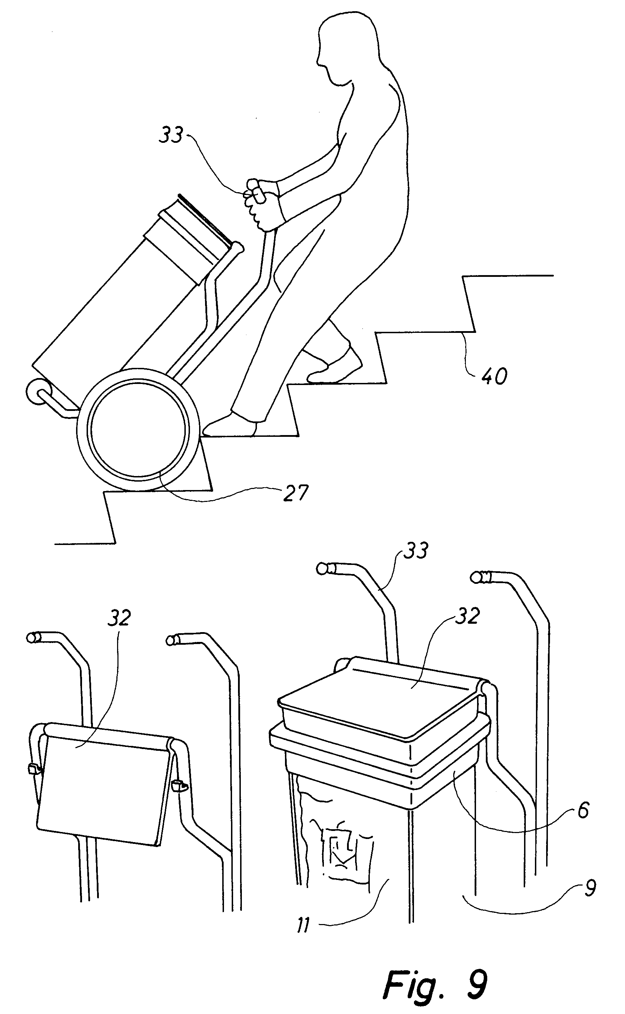

Figure 9 shows how because of the placing of the handles 23 and the use of large wheels it is possible to use the cart 21 on stairs 40. In Figure 9 is also seen how the cart may be provided with a lid 32, capable of being swung all the way round, whereby it will normally hang vertically downwards when there is no rubbish bag holder 1 on the cart 21, and as soon as a rubbish bag holder 1 has been mounted on the cart 21, the lid 32 may be swung round to close the rubbish bag holder 1. The cart is normally made of light-alloy metal and the lid 32 may e.g. be a metal, rubber or plastic plate. The wheels 26 used in connection with the cart are traditionally large and filled with air.

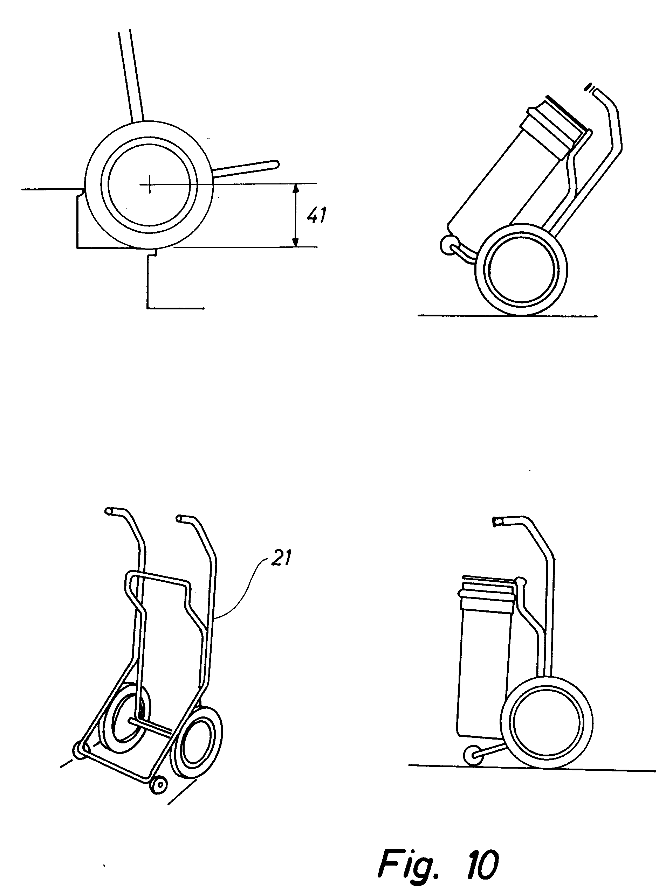

Figure 10 shows other embodiments of the cart 21, where it is especially seen that the tubular construction may be made very simple and that when running on stairs the radius 41 of the wheels must be larger than the height of the step.

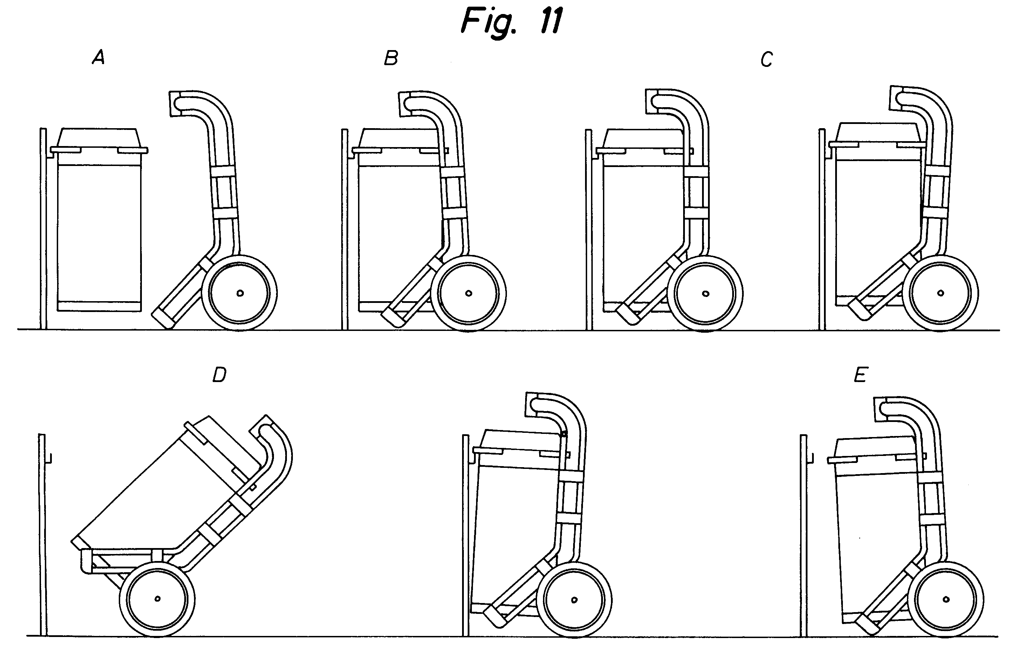

In Figure 11 it is seen how the cart approaches a filled rubbish bag holder A, the cart is then run under the rubbish bag holder B, whereupon the cart is tilted slightly C, whereby the rubbish bag holder lets go of the fitting, whereupon the cart may be driven away with the rubbish bag holder D.

In Figure 11 it is also seen how the rubbish bag holder may rest on the cart without these two tilting away from each other E.

The bag is put inside the rubbish bag holder manually by firstly opening the bag, placing it inside the top portion and finally folding the upper edge of the bag over the top of the top portion, the top being slightly conical. It is possible to put in the bag automatically, e.g. by means of gripping devices, pressurized air or low pressure.

The top portion is conventionally fixed relative to the bottom and sides (the cover).

The bag is folded over the top portion, where the folded portion ensures that neither the top portion nor the cover is smudged.

The top portion only guides or fixates the bag in the right position and keeps the bag open. The bag is carried and supported by bottom and sides of the cover per se. This means that the top portion is only adapted to keep the bag open and not to carry the bag. The bag is normally made of recycled paper having a very low and diverse strength, so that when the bag is filled, it cannot be carried by the top per se, i.e. the bag can only be used if it is supported at the bottom and sides.

Emptying of the rubbish bag holder takes place through the hole in the side where the weight and inertia of the bag with contents allow it to be forced out relative to the holder. The bag may be slit in the upper edge (near the top portion when it is mounted, said slit corresponding to the width of the fold, about 50 mm), whereby none of the sections of the bag is caught on the top portion per se, e.g. the corners.

The rubbish bag holder may also be constructed as a U-shaped, folded plate material or wire material to provide support on two of the sides of the bag and the bottom of the bag.

The bag holders for each fraction are traditionally different as different types of paper are used for each type of bag, and as each type of bag has different volumes, i.e. the individual bag for each fraction is different, one fraction comprising metal scrap, a second fraction comprising glass, a third fraction comprising wet rubbish, a fourth fraction comprising paper etc.

For environmental reasons it is aimed at manufacturing the bags without the use of strong dyes, the marking of the bags indicting the fraction in question either taking place by means of form, shape or cutting instuctions.

It is an esssential detail of the system that the sanitation worker does not come into contact with the used/filled bag, but only get in contact with the clean bag, e.g. when putting it in the holder. If the bag is put into the holder automatically, the sanitation worker does not come into contact with neither the used nor the clean bag, which will reduce the environmental annoyances associated with the handling of refuse considerably.

The invention is not limited to the above embodiments but may be varied within the scope of the claims. The refuse bag holder does thus not have to be box-shaped, but may be round, half-round or of a polygonal cross section.

## Claims

1. Refuse system comprising a detachable rubbish bag holder (1) for receiving rubbish bags (11), especially paper bags and having in the side an opening (5) for passage of a filled bag (11) when emptying the holder, characterised in that the system comprises a stationary fitting (14) detachably receiving the holder, the opening of which being substantially closed by said fitting (14).

2. A system as claimed in claim 1, characterised in that the holder comprises a top portion (6), a bottom portion (8) substantially horizontal during use and a cover (9) placed between the top portion (6) and the bottom portion (8), said cover further guiding the inner bag (11) fastened at the top portion (6).

3. A system as claimed in claim 1 or 2, characterised by the older being box-shaped and having a lid (12).

4. A system as claimed in one or more of the claims 1-3, characterised in that a filled bag (11) is released from the rubbish bag holder (1) by moving the top portion (6) relative to the box-shaped cover (9).

5. A rubbish bag holder as claimed in one or more of the claims 1-4, characterised in that the suspension line (i.e. the line along which the rubbish bag holder is fitted) is placed in the top portion (6) or the upper portion of the box-shaped cover (9), however, without the top portion (6) or the box-shaped cover (9) being separable when hung, whereby the waste bag (11) would otherwise be released unintentionally.

## Patentansprüche

1. Abfallsystem mit einem abnehmbaren Abfallsackhalter (1) zur Aufnahme von Abfallsäcken (11), insbesondere Papiersäcken, welcher eine seitliche Öffnung (5) zum Hindurchbewegen eines gefüllten Sackes (11) beim Entleeren des Halters aufweist, dadurch gekennzeichnet, daß das System ein ortsfestes Anschlußstück (14) aufweist, welches den Halter abnehmbar aufnimmt, dessen Öffnung im wesentlichen durch dieses Anschlußstück (14) geschlossen ist.

2. System nach Anspruch 1, dadurch gekennzeichnet, daß der Halter einen Oberteil (6), einen während der Verwendung im wesentlichen horizontalen Bodenteil (8) und eine zwischen dem Oberteil (6) und dem Bodenteil (8) placierte Abdeckung (9) aufweist, wobei die Abdeckung weiters den am Oberteil (6) befestigten inneren Sack (11) führt.

3. System nach Anspruch 1 oder 2, dadurch gekennzeichnet, daß der Halter kastenförmig ist und einen Deckel (12) aufweist.

4. System nach einem oder mehreren der Ansprüche 1 bis 3, dadurch gekennzeichnet, daß ein gefüllter Sack (11) vom Abfallsackhalter (1) gelöst wird, indem der Oberteil (6) in bezug auf die kastenförmige Abdeckung (9) bewegt wird.

5. Abfallsackhalter nach einem oder mehreren der Ansprüche 1 bis 4, dadurch gekennzeichnet, daß die Aufhängungslinie (d.h., die Linie, entlang welcher der Abfallsackbehälter eingepaßt ist) im Oberteil (6) oder im oberen Teil der kastenförmigen Abdeckung (9) placiert ist, ohne daS der Oberteil (6) oder die kastenförmige Abdeckung (9) im eingehängten Zustand trennbar ist, wodurch ansonsten der Abfallsack (11) unabsichtlich freigegeben würde.

## Revendications

1. Ensemble de gestion d'ordures, comprenant un organe (1) de support de sac amovible à ordures destiné à loger des sacs (11) à ordures, notamment des sacs en papier, et ayant sur le côté une ouverture (5) pour le passage d'un sac rempli (11) lorsque l'organe de support est vidé, caractérisé en ce que l'ensemble comporte une monture fixe (14) destinée à loger temporairement l'organe de support dont l'ouverture est pratiquement fermée par la monture (14).

2. Ensemble selon la revendication 1, caractérisé en ce que l'organe de support comporte une partie supérieure (6), une partie inférieure (8) qui est pratiquement horizontale pendant l'utilisation, et un couvercle (9) placé entre la partie supérieure (6) et la partie inférieure (8), le couvercle guidant en outre le sac interne (11) qui est fixé à la partie supérieure (6).

3. Ensemble selon la revendication 1 ou 2, caractérisé en ce que l'organe de support a une forme de boîte possédant un capot (12).

4. Ensemble selon une ou plusieurs des revendications 1 à 3, caractérisé en ce qu'un sac rempli (11) est séparé de l'organe de support (1) de sac à ordures par déplacement de la partie supérieure (6) par rapport au couvercle (9) en forme de boîte.

5. Organe de support de sac à ordures selon l'une ou plusieurs des revendications 1 à 4, caractérisé en ce que la ligne de suspension (c'est-à-dire la ligne le long de laquelle l'organe de support du sac à ordures est monté) est placée dans la partie supérieure (6) ou la partie du haut du couvercle (9) en forme de boîte, mais la partie supérieure (6) ou le couvercle (9) en forme de boîte n'est pas séparable, lorsqu'il est suspendu, et ne permet donc pas une libération intempestive du sac à ordures (11).
